Europäisches Patentamt

European Patent Office

Office européen des brevets

(19)

(11) Veröffentlichungsnummer: **0 180 111 B1**

(12) **EUROPÄISCHE PATENTSCHRIFT**

(45) Veröffentlichungstag der Patentschrift: **17.04.91**

(51) Int. Cl.⁵: **G01M  17/00**

(21) Anmeldenummer: **85113247.2**

(22) Anmeldetag: **18.10.85**

(54) **Gangschaltautomat.**

(30) Priorität: **27.10.84 DE 3439376**

(43) Veröffentlichungstag der Anmeldung:
**07.05.86 Patentblatt 86/19**

(45) Bekanntmachung des Hinweises auf die
Patenterteilung:
**17.04.91 Patentblatt 91/16**

(84) Benannte Vertragsstaaten:
**CH DE FR GB IT LI SE**

(56) Entgegenhaltungen:
**DE-A- 2 004 979**
**GB-A- 2 092 961**
**US-A- 4 466 279**

(73) Patentinhaber: **Bayerische Motoren Werke Aktiengesellschaft**
**Patentabteilung AJ-30 Postfach 40 02 40 Petuelring 130**
**W-8000 München 40(DE)**

(72) Erfinder: **Klausnitzer, Herbert**
**Alpenstrasse 4**
**W-8084 Inning(DE)**
Erfinder: **Berndt, Wolfgang**
**Konrad-Dreher-Strasse 5**
**W-8162 Schliersee(DE)**
Erfinder: **Luber, Josef, Dr.**
**Wendelsteinstrasse 18**
**W-8058 Erding(DE)**

(74) Vertreter: **Bullwein, Fritz**
**Bayerische Motoren Werke Aktiengesellschaft Postfach 40 02 40 Petuelring 130 AJ-33**
**W-8000 München 40(DE)**

**Beschreibung**

Die Erfindung bezieht sich auf einen Gangschaltautomat für ein Schaltgetriebe von Kraftfahrzeugen, mit zwei Stelleinrichtungen, die um ein Vertikallager vertikal verschwenkbar sind und einen Schalthebel des Schaltgetriebes nach einem Prüfprogramm in die Gangstellungen bewegen.

Bei einem derartigen Gangschaltautomat, wie er aus der DE-OS 20 04 979 bekannt ist, sind pneumatische Stelleinrichtungen in Form von Arbeitszylindern verwendet, die auf einer Grundplatte ausschließlich horizontal beweglich gelagert sind. Die beiden Arbeitszylinder stehen zueinander senkrecht und sind auf die Hauptrichtungen des Getriebes ausgerichtet. Die wirksame Länge der Arbeitszylinder ist relativ groß, um dadurch Bewegungen quer zur jeweiligen Arbeitsrichtung weitgehend zu vermeiden. Neben pneumatischen Stelleinrichtungen ist auch die möglich Verwendung elektrischer Stelleinrichtungen pauschal und ohne konkrete Ausführung angegeben.

Ferner ist aus der US 4466279 ein Gangschaltautomat bekannt, bei dem eine Stelleinrichtung durch einen Gleichstrommotor axial bewegt wird. Die Stelleinrichtung ist zwischen zwei Endstellungen entsprechend den beiden Getriebegassen für den ersten und zweiten bzw. dritten und vierten Gang horizontal verschwenkbar.

Beiden bekannten Gangschaltautomaten gemeinsam ist das Erfordernis einer exakten Ausrichtung auf das Schaltgetriebe. In Verbindung damit ist es in beiden Fällen nur möglich, ein vorgegebenes, für das jeweilige Schaltgetriebe passendes und starres Prüfprogramm auszuführen. Darüber hinaus handelt es sich bei den verwendeten Stelleinrichtungen um Servosysteme, die einen hohen Regelaufwand erfordern.

Der Erfindung liegt die Aufgabe zugrunde, einen Gangschaltautomat der eingangs genannten Art zu schaffen, der universell einsetzbar ist und der darüber hinaus einem allenfalls geringen Verschleiß unterliegt.

Die Lösung dieser Aufgabe besteht gemäß der Erfindung darin, daß mindestens ein frei bewegliches Horizontallager für die Horizontalbewegung des Schalthebels den Stelleinrichtungen zugeordnet ist, daß die Stelleinrichtungen elektrische Schrittmotoren sind und daß das Prüfprogramm mit Hilfe des jeweiligen Schaltgetriebes im Teach-in-Modus gewonnen ist.

Durch das Horizontallager wird der erforderliche Bauraum verringert, da die Stelleinrichtungen relativ nahe an dem Schalthebel angeordnet werden können. Die horizontalen Mit-Bewegungen der einen Stelleinrichtung aufgrund der Bewegung der anderen Stelleinrichtung, die bei Verkleinerung dieses Abstands größer werden, können durch die Horizontallager aufgefangen werden. Die Verwendung von Schrittmotoren ermöglicht es, auf aufwendige Servosysteme zu verzichten. Die Kombination von Horizontalgelenken mit den Schrittmotoren erlaubt darüber hinaus, beliebige Hand- oder Automatik-Schaltgetriebe auch mit relativ großen Arbeits feldern auf kleinem Raum schnell und zuverlässig zu schalten. Dadurch wird die erforderliche Prüfzeit erheblich verringert. Die freie Programmierbarkeit des Prüfprogramms ergibt darüber hinaus die Möglichkeit, unterschiedliche Schaltgetriebe hintereinander zu schalten. Dabei enfällt die Notwendigkeit, die Stelleinrichtungen auf den Schalthebel auszurichten. Die freie Programmierbarkeit ermöglicht darüber hinaus, Schaltgetriebe desselben Typs nacheinander zu testen, ohne die Justierung der Stelleinrichtungen jeweils in der gleichen Weise vornehmen zu müssen. Sofern andererseits die exakte Ausrichtung der Stelleinrichtungen für aufeinanderfolgende Schaltgetriebe desselben Typs in ein und derselben Weise sichergestellt ist, kann jedes Getriebe mit Hilfe des beim ersten Getriebe erlernten Prüfprogramms getestet werden.

Jedes Prüfprogramm kann in unterschiedlicher Weise ausgeführt werden. So ist es möglich, die Steuerfrequenzen der Schrittmotore unabhängig voneinander zu wählen und beispielsweise die Stelleinrichtungen nacheinander zu bewegen. Demgegenüber ergibt sich eine Verringerung des Zeitaufwands, wenn die Stelleinrichtungen gleichzeitig gesteuert werden. Die Abstimmung der Steuerfrequenzen der beiden Schrittmotore kann dabei in der Weise erfolgen, daß beide Steuerfrequenzen aus einer gemeinsamen Hauptfrequenz abgeleitet sind. Dabei ergibt sich die Möglichkeit, die Prüfprogramme mit einstellbarer Geschwindigkeit auszu führen. Hierzu ist dann lediglich die Veränderung der Hauptfrequenz erforderlich.

Beim Betrieb des Gangschaltautomaten kann es zu Dejustierungen kommen. Eine der Ursachen kann ein Schritt verlust eines Schrittmotores sein. Die einzelnen Gänge können dann nicht mehr exakt angefahren werden. Ein derartiger Fall kann mit Hilfe eines Biegespannungsgebers am Schalthebel erkannt werden, mit dem dessen Bewegung kontrolliert und ggf. eine Abhilfemaßnahme eingeleitet werden kann. Der Geber erkennt, wenn der Schalthebel nicht in eine Gasse eingeschoben werden kann bzw. in diesen Gassen die Schaltstellung nicht erreicht wird. Im ersten Fall ist die Biegespannung größer, im zweiten kleiner als bei ordnungsgemäßen Betrieb.

Die konstruktive Realisierung des Gangschaltautomaten kann auf unterschiedliche Weise erfolgen. So kann beispielsweise im Übertragungsweg zwischen mindestens einem der Schrittmotore und dem Schalthebel eine Zahnstange und ein Horizontallager angeordnet sein. Die Zahnstange kann dabei zusammen mit dem zugehörigen Schrittmotor oder auch allein vertikal bewegbar oder aber in Vertikalrichtung nicht bewegbar sein. In diesem Fall kann die Vertikalbewegung zusätzlich über das Horizontallager erfolgen, sofern dieses als Kugelgelenk ausgebildet ist. Zwischen dem Schalthebel kann dann eine starre Stange angeordnet sein, die am Schalthebel ebenfalls mit Hilfe eines Kugelgelenks befestigt ist.

Eine weitere Möglichkeit, das Horizontallager zu realisieren, besteht darin, die Zahnstange axial beweglich und um die Achse mindestens eines der Schrittmotore verschwenkbar zu lagern. Hierfür gibt es mehrere Ausführungsformen. Bei einer ist die Zahnstange um die Achse des Schrittmotors frei drehbar. Bei einer weiteren kann die Schwenkbewegung der Zahnstange durch einen der beiden Schrittmotore gesteuert sein. Dies eröffnet eine bauliche Vereinfachung insoweit, als die Bewegung des Schalthebels dann durch eine einzige Zahnstange erfolgen kann. Diese wird durch den einen Schrittmotor gegenüber diesem in ihrer wirksamen Länge verstellt und durch den anderen Schrittmotor um die Achse des ersten Schrittmotors verschwenkt. Die Zahnstange führt somit eine kombinierte Axial- und Radialbewegung durch.

Für diese motorische Schwenkbewegung der Zahnstange kann diese in einem Kreissegment axial beweglich gelagert sein, das um die Achse des ersten Schrittmotors drehbeweglich gelagert ist. Das Kreissegment selbst ist dabei durch den zweiten Schrittmotor angetrieben.

In der Zeichnung sind Ausführungsbeispiele der Erfindung dargestellt. Es zeigt

Fig. 1    ein Blockschaltbild für die schaltungstechnische Steuerung der beiden Schrittmotore des erfindungsgemäßen Gangschaltautomaten.

Fig. 2    eine schematische Darstellung eines ersten Ausführungsbeispiels des erfindungsgemäßen Gangschaltautomaten,

Fig. 3    eine Draufsicht zu Fig. 2,

Fig. 4    einen Schnitt in Fig. 3,

Fig. 5    ein zweites Ausführungsbeispiel in Draufsicht,

Fig. 6    ein Schnitt zu Fig. 5,

Fig. 7    ein drittes Ausführungsbeispiel in Draufsicht und

Fig. 8    einen Schnitt zu Fig. 7.

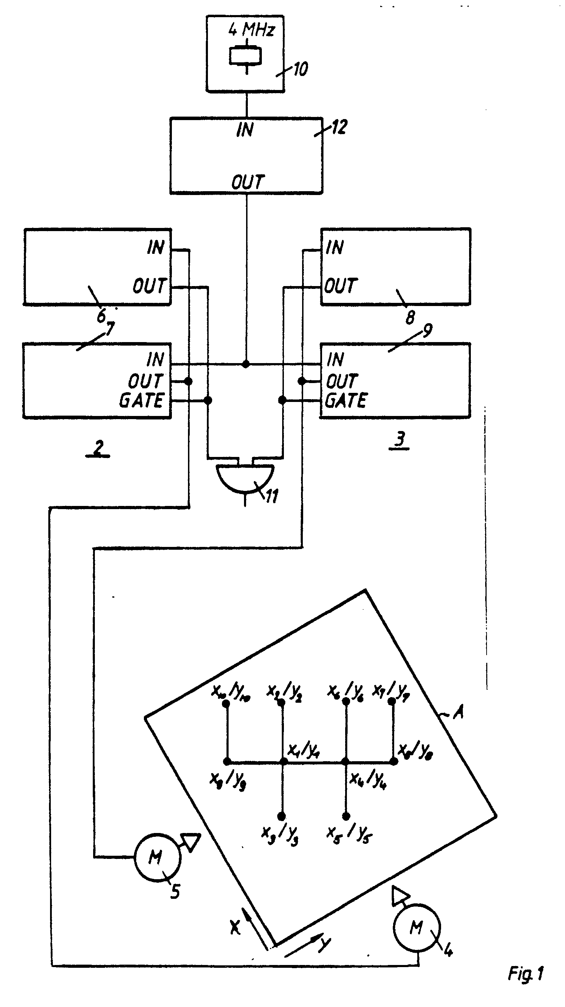

Das Blockschaltbild von Fig. 1 enthält einen -nicht gezeigten- Speicher, in dem die Koordinaten eines zu prüfenden Handschaltgetriebes (nicht dargestellt) gespeichert sind. Bei diesen Koordinaten handelt es sich um die Ausgangs- und Endpunkte der Schaltwege des Handschaltgetriebes. Bei einem 5-Gang-Getriebe handelt es sich dabei für die Vorwärtsgänge um 8 Punkte, deren Koordinaten $X_1/Y_1$ bis $X_8/Y_8$ innerhalb des durch die X- und Y-Achse bestimmten Arbeitsfeldes A schematisch dargestellt sind. Die Koordinaten-Paare $X_1/Y_1$ bis $X_8/Y_8$ werden vor Beginn einer Prüfung anhand des jeweiligen Prüflings in einer beispielsweise aus der Roboter-Technologie bekannten Weise, z.B. dem sog. Teach-in-Verfahren, gewonnen. Dabei werden die Schaltwege nacheinander aufgenommen, indem sie von Hand mit Hilfe des Schalthebels durchfahren und die Bewegungen des Schalthebels in X- und Y-Richtung mit Hilfe von Winkelgebern für die Ausgangswelle der Schrittmotore 4 bzw. 5 aufgezeichnet werden.

Beim Prüfvorgang werden diese Schaltwege nachgefahren. Hierzu enthält das Blockschaltbild von Fig. 1 im wesentlichen zwei Frequenzteiler 2 und 3, mit denen die für die Bewegung des Schalthebels in X- und Y-Richtung verwendeten Schrittmotoren 4 und 5 angesteuert werden. Die Frequenzteiler 2 und 3 enthalten jeweils zwei Zähler 6 und 7 bzw. 8 und 9, von denen die Zähler 6 und 8 vor Durchfahren jedes Schaltwegs auf einen Wert gesetzt sind, der gleich der Differenz der Koordinatenwerte in X- bzw. Y-Richtung der den Schaltweg bestimmenden Schaltpunkte ist. Für den ersten Schaltweg, bei dem der Schalthebel aus der Neutralstellung ($X_1/Y_1$) in die Stellung ($X_2/Y_2$) des ersten Ganges bewegt wird, ist der Zähler 6 mit der Differenz $X_2 - X_1$ und der Zähler 8 mit der Differenz $Y_2 - Y_1$ geladen.

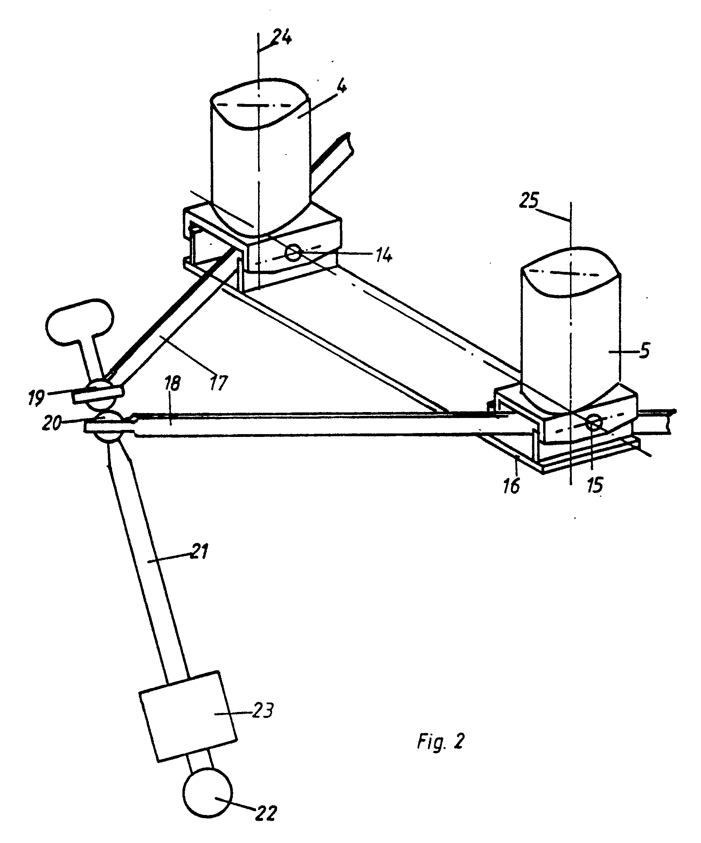

Den Zählern 6 und 8 ist ein Zähler (7 bzw. 9) vorgeschaltet, dessen Zählerstand zu dem des zugeordneten Zählers 6 bzw. 8 im reziproken Verhältnis steht. Dies wird schaltungstechnisch durch Ausbildung der Zähler 6 und 8 als Toggle erreicht. Die Eingänge "In" der Zähler 7 und 9 sind mit einem Oszillator 10 verbunden, der eine Hauptfrequenz von z.B. 4 MHz liefert. Die Ausgänge "Out" sind einerseits mit den Schrittmotoren 4 bzw. 5 und andererseits mit den Eingängen "In" der Zähler 6 und 8 verbunden. Die Ausgänge "Out" der Zähler 6 und 8 sind einerseits auf ein UND-Gatter 11 und andererseits auf den Gate-Eingang der Zähler 7 und 9 geführt. In der Verbindung des Oszillators 10 zu den Zählern 7 und 9 befindet sich ein als variabler Verteiler wirkender Zähler 12, der über einen Biegespannungsgeber (23, Fig. 2) gesteuert ist und die Ausgangsfrequenz des Oszillators 10 in der Weise verändert, daß die Bewegung des Schalthebels 21 (Fig. 2) längs eines Schaltwegs mit konstanter Schaltkraft erfolgt. Der Zähler 12 steuert die Geschwindigkeit , mit der der Schalthebel verfahren wird.

Die Frequenzteiler 2 und 3 erzeugen eine Schrittfrequenz, die aus der Ausgangsfrequenz des Zählers 12 abgeleitet ist und die ihrerseits um so größer ist, je größer die vom zugehörigen Schrittmotor 4 bzw. 5 zurückzulegende Koordinatendifferenz ist. Beim ersten Schaltweg ist dies die Koordinatendifferenz $X_2 - x_1$ für den Schrittmotor 4 und $Y_2 - Y_1$ für den Schrittmotor 5. Der Schalthebel durchfährt damit den jeweiligen Schaltweg zwischen seinem Ausgangs- und Endpunkt. Das Erreichen des Endpunkts wird mit Hilfe des UND-Gatters 11 festgestellt und das Durchfahren des sich daran anschließenden Schaltwegs eingeleitet. Hierzu werden die Zähler 6 und 8 mit den entsprechenden Werten der Koordinaten-Differenzen dieses Schaltwegs geladen. Sämtliche Zähler besitzen vor diesem Laden den Wert 0. Dies ergibt sich für die Zähler 6 und 8 unmittelbar bei Erreichen des Endpunkts des jeweiligen Schaltwegs und für die Zähler 7 und 9 aus der sich dadurch ergebenden Belegung des Gate-Eingangs mit diesem Wert. Der sich nunmehr anschließende Schaltweg wird in entsprechender Weise durchlaufen. Dabei handelt es sich bei dem detaillierter beschriebenen ersten Schaltweg um das Zurücklegen des entgegengesetzten Schaltwegs, d.h. dem Durchfahren der Strecke zwischen den Punkten $x_2 /Y_2$ und dem Punkt $X_1/Y_1$ . Am Ende dieses Schaltwegs schließt sich der nächste Schaltweg an. Dabei handelt es sich um den Schaltweg $X_1 /Y_1$ nach $X_3/Y_3$ bzw. $X_4/Y_4$.

Das Ausführungsbeispiel von Fig. 2 zeigt die beiden Schrittmotore 4 und 5, die um eine horizontale Achse 14 bzw. 15 frei drehbar gelagert sind. Die Schrittmotore sitzen auf einer starr befestigten Platte 16. Sie bewegen zwei Betätigungsstangen 17 bzw. 18, deren Enden in Kugelgelenken 19 bzw. 20 übereinander auf dem Schalthebel 21 gelagert sind. Am Fußpunkt des Schalthebels 21, der einen Drehpunkt 22 besitzt, sitzt ein Biegespannungsgeber 23, bei dem es sich beispielsweise um Dehnungsmeßstreifen handelt. Die Betätigungsstangen 17 und 18 sind um die Achsen 24 und 25 der Schrittmotore 4 und 5 schwenkbar gelagert. Damit ist es möglich, die bei einer Axialbewegung einer der Betätigungsstangen 17 bzw. 18 sich zwangsläufig ergebende Schwenkbewegung der anderen Betätigungsstange nachzuvollziehen. Die damit verbundene Vertikalbewegung der Schrittmotore 4 und 5 wird durch Verschwenken um ihre Achsen 14 bzw. 15 ausgeglichen.

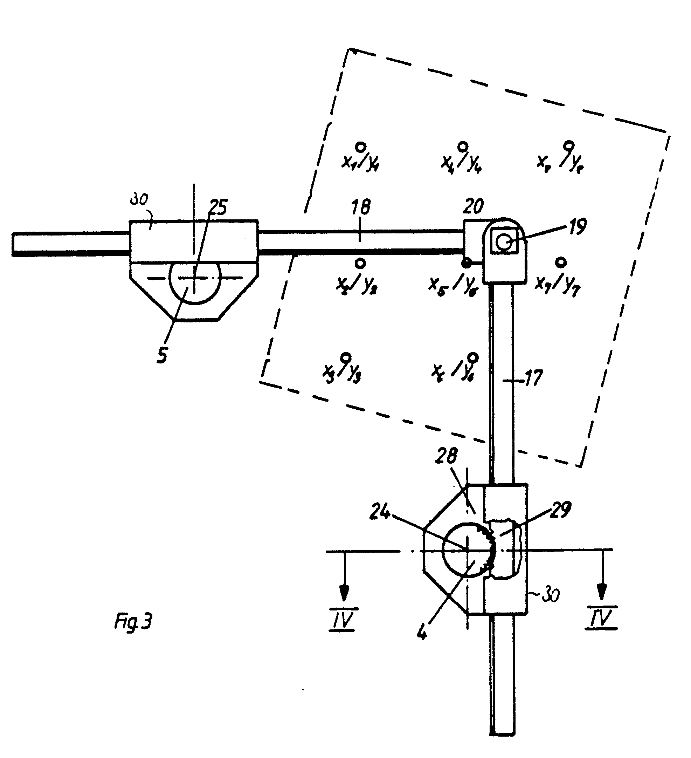

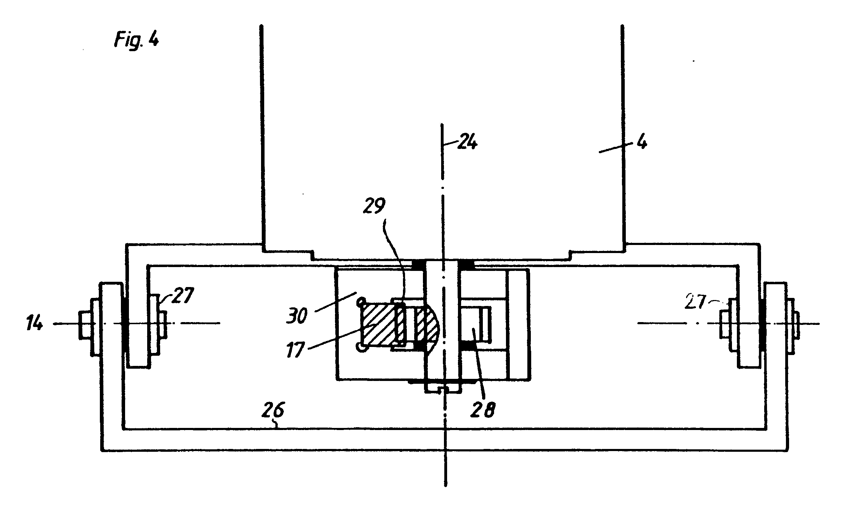

Die in Fig. 3 gezeigte Draufsicht, bei der die Grundplatte 16 weggelassen ist, zeigt die Ausgangsstellung, bei der die Betätigungsstangen 17 und 18 senkrecht zueinander stehen. Ausgehend hiervon werden die durch die eingezeichneten Punkte $X_1 /Y_1$ bis $X_8/Y_8$ definierten Schaltwege in der beschriebenen Weise durchlaufen. Dabei ergeben sich relativ große Schwenkwinkel der Betätigungsstangen 17 und 18, die durch gelenkartige Lagerung dieser Betätigungsstangen bezüglich der Achsen 24 und 25 der Schrittmotore 4 und 5 erzielt bzw. ausgeglichen werden. Dies ist anhand von Fig. 4 näher erläutert.

Der in Fig. 4 gezeigte Schnitt längs der Linie IV-IV in Fig.3 zeigt den Schrittmotor 4, der um die Achse 14 schwenkbar in einem Grundkörper 26 gelagert ist. Der Grundkörper 26 sitzt auf der Grundplatte 16. In den Lagerstellen des Schrittmotors 4 im Grundkörper 26 sitzt jeweils eine Rückstellfeder 27, die den Schrittmotor 4 in aufrechter Position hält. Um die Achse 24 schwenkbar gelagert ist die Betätigungsstange 17, die im Bereich eines Antriebsritzels 28 des Schrittmotors 24 eine Zahnung 29 besitzt.

Bei der Axialbewegung der Betätigungsstange 17 wird diese durch das Antriebsritzel 28 bewegt. Bei einer durch Axialverschiebung der Betätigungsstange 18 verursachten Schwenkbewegung wird der Lagerkörper 30 der Betätigungsstange 17 um die Achse 24 verschwenkt. Das Antriebsritzel 28 wird dabei so bewegt, daß die Betätigungsstange 17 gegenüber dem Antriebsritzel 28 eine kompensatorische Axialbewegung ausführt.

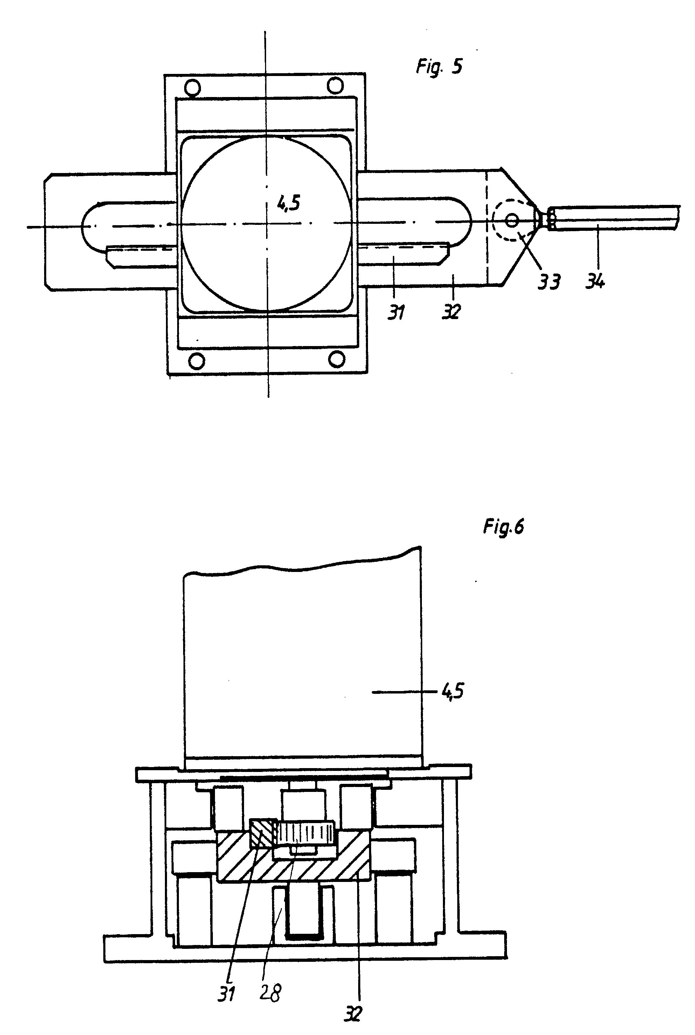

Beim Ausführungsbeispiel nach den Fig. 5 und 6 ist eine Zahnstange 31 gegenüber der Achse des Schrittmotors 4 nicht schwenkbar gelagert. Die Zahnstange 31 sitzt in einem Rahmen 32, der über ein Kugelgelenk 33 auf eine Betätigungsstange 34 wirkt. Diese sitzt am Schalthebel (nicht dargestellt) in einem Kugelgelenk, das dem Kugelgelenk 19 bzw. 20 von Fig. 2 entspricht. Dieses Ausführungsbeispiel unterscheidet sich dadurch, daß die Zahnstange 31 und die Betätigungsstange 34 nicht linear zueinander verlaufen. Bei einer Axialbewegung der Zahnstange 31 resultieren, sofern die Betätigungsstange 34 nicht auf die Zahnstange 31 ausgerichtet ist, Kräfte senkrecht zur Achse der Zahnstange 31, die durch entsprechende Dimensionierung der Kugelgelenke 33 und des zugehörigen Kugelgelenks entsprechend 19 bzw. 20 ausgeglichen werden. Desweiteren ist der Schrittmotor 4 auch nicht um eine horizontale Achse schwenkbar. Die Vertikalbewegung der Kugelgelenke 19 und 20 bei Durchfahren der Schaltwege wird durch die sich ergebende variable Einstellung des Anstellwinkels der Betätigungsstange 34 ausgeglichen.

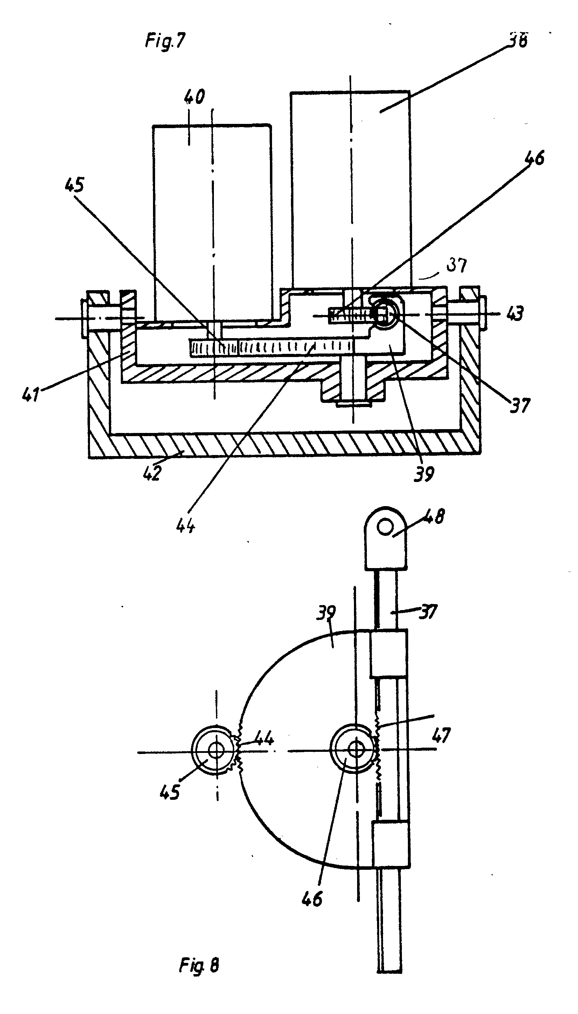

Das Ausführungsbeispiel von den Fig. 7 und 8 unterscheidet sich gegenüber den vorhergehenden Ausführungsbeispielen insoweit, als nunmehr der Schalthebel 21 nur noch durch eine einzige Betätigungsstange 37 bewegt wird. Diese ist durch einen Schrittmotor 38 axial gegenüber einem Lagerkörper 39 verschiebbar. Dieser seinerseits ist schwenkbar um die Achse des Schrittmotors 38 gelagert. Für die Schwenkbewegung des Lagerkörpers 39 ist ein Schrittmotor 40 vorgesehen, der zusammen mit dem Schrittmotor 38 auf einem Zwischenkörper 41 befestigt ist. Der Zwischenkörper 41 seinerseits ist in einem Grundkörper 42 entsprechend dem Grundkörper 26 um eine waagrechte Achse 43 schwenkbar gelagert. Der Lagerkörper 39 besitzt eine Verzahnung 44, in die ein Antriebsritzel 45 des Schrittmotors 40 eingreift. Der Schrittmotor 38 greift mit seinem Antriebsritzel 46 in eine Verzahnung 47 der Zahnstange 37 ein.

Mit Hilfe der Zahnstange 37, die an ihrem Ende ein Kugelgelenk 48 entsprechend dem Kugelgelenk 19 bzw. 20 besitzt, wird der Schalthebel durch entsprechende Steuerung der Schrittmotore 38 und 40 bewegt. Die Betätigungsstange 37 führt somit eine Polarbewegung aus, wobei durch den Schrittmotor 38 die Axialverstellung und durch den Schrittmotor 40 die Winkelverstellung des Schalthebels vorgenommen wird. Wie beim Ausführungsbeispiel nach den Fig. 2 bis 4 wird eine sich dabei ergebende Vertikalbewegung des Schalthebels durch Verschwenken des Zwischenkörpers 41 gegenüber dem Grundkörper 42 nachvollzogen.

**Ansprüche**

1. Gangschaltautomat für ein Schaltgetriebe von Kraftfahrzeugen, mit zwei Stelleinrichtungen, die um ein Vertikallager (14,15; 33; 43) vertikal verschwenkbar sind und einen Schalthebel (21) des Schaltgetriebes nach einem Prüfprogramm in die Gangstellungen bewegen, dadurch gekennzeichnet, daß mindestens ein frei bewegliches Horizontallager (24, 25; 33) für die Horizontalbewegung des Schalthebels (21) den Stelleinrichtungen zugeordnet ist, daß die Stelleinrichtungen elektrische Schrittmotoren (4,5;38,40) sind und daß das Prüfprogramm mit Hilfe des jeweiligen Schaltgetriebes im Teach-In-Modus gewonnen ist.

2. Gangschaltautomat nach Anspruch 1, dadurch gekennzeichnet, daß die Steuerfrequenzen der Schrittmotore (4,5 bzw. 38,40) aus einer gemeinsamen Hauptfrequenz abgeleitet sind.

3. Gangschaltautomat nach Anspruch 1 oder 2, gekennzeichnet durch einen Biegespannungsgeber (23) am Schalthebel (21) zur Kontrolle von dessen Bewegung.

4. Gangschaltautomat nach einem der Ansprüche 1 bis 3, gekennzeichnet durch eine Zahnstange (31) und ein Horizontallager (33) im Übertragungsweg zwischen mindestens einem der Schrittmotore (4,5) und dem Schalthebel (21).

5. Gangschaltautomat nach Anspruch 4, dadurch gekennzeichnet, daß das Horizontallager ein Kugelgelenk (33) für die zusätzliche Vertikalbewegung des Schalthebels (21) ist.

6. Gangschaltautomat nach Anspruch 3, dadurch gekennzeichnet, daß eine Zahnstange (17,18,37) um die Achse (14,15) mindestens eines der Schrittmotoren (4,5) verschwenkbar ist.

7. Gangschaltautomat nach Anspruch 6, dadurch gekennzeichnet, daß die Zahnstangen (17,18) um die Achse (14,15) des Schrittmotors (4,5) frei drehbar ist.

8. Gangschaltautomat nach Anspruch 6, dadurch gekennzeichnet, daß die Schwenkbewegung der Zahnstange (37) durch einen der beiden Schrittmotore (40) gesteuert ist.

9. Gangschaltautomat nach Anspruch 8, dadurch gekennzeichnet, daß die Zahnstange (37) in einem Kreissegment (39) axial beweglich gelagert ist, das drehbeweglich gegenüber der Achse des einen Schrittmotors (38) gelagert ist.

**Claims**

1. An automatic gear-shifting means for a gearshift mechanism of motor vehicles, comprising two adjusting devices which are vertically pivotable around a vertical bearing (14, 15; 33; 43) and move a shift lever (21) of the gear-shift mechanism into the gear positions in accordance with a test program, characterised in that at least one freely movable horizontal bearing (24, 25; 33) for horizontally moving the shift lever (21) is associated with the adjusting devices, the adjusting devices are electric stepping motors (4, 5; 38, 40) and the test program is obtained in teach-in mode by means of the respective gear-shift mechanism.

2. An automatic gear-shifting means according to claim 1, characterised in that the control frequencies of the stepping motors (4, 5 and 38, 40) are derived from a common main frequency.

3. An automatic gear-shifting means according to claim 1 or 2, characterised by a bending-stress pick-up (33) on the shift lever (21) for monitoring the motion thereof.

4. An automatic gear-shifting means according to any of claims 1 to 3, characterised by a rack (31) and a horizontal bearing (33) in the transmission path between at least one of the stepping motors (4, 5) and the shift lever (21).

5. An automatic gear-shifting means according to claim 4, characterised in that the horizontal bearing is a universal joint (33) for additional vertical motion of the shift lever (21).

6. An automatic gear-shifting means according to claim 3, characterised in that the rack (17, 18, 37) is pivotable around the axis (14, 15) of at least one of the stepping motors (4, 5).

7. An automatic gear-shifting means according to claim 6, characterised in that the racks (17, 18) are freely rotatable around the axis (14, 15) of the stepping motor (4, 5).

8. An automatic gear-shifting means according to claim 6, characterised in that the pivoting motion of the rack (37) is controlled by one of the two stepping motors (40).

9. An automatic gear-shifting means according to claim 8, characterised in that the rack (37) is mounted for axial motion in a circular segment (39) which is rotatably mounted relative to the axis of one stepping motor (38).

**Revendications**

1. Appareil de commande automatique pour une boîte de vitesses de véhicules automobiles, avec deux dispositifs de positionnement qui sont susceptibles de pivoter verticalement autour d'un palier horizontal (14, 15; 33; 43), et qui déplacent dans les positions de marche un levier de changement de vitesses (21) de la boîte de vitesses selon un programme de contrôle, appareil de commande automatique caractérisé en ce qu'au moins un palier horizontal librement mobile (24, 25; 33) pour le déplacement horizontal du levier de changement de vitesses (21) est associé aux dispositifs de positionnement, en ce que les dispositifs de positionnement sont des moteurs électriques pas à pas (4, 5; 38, 40), et en ce que le programme de contrôle est obtenu à l'aide de la boîte de vitesses considérée dans le mode colloque.

2. Appareil de commande automatique selon la revendication 1, caractérisé en ce que les fréquences de commande des moteurs pas à pas (4, 5 ou bien 38, 40) sont dérivées d'une fréquence principale commune.

3. Appareil de commande automatique selon la revendication 1 ou la revendication 2, caractérisé en ce qu'il est prévu un indicateur de contraintes de flexion (23) sur le levier de changement de vitesses (21) pour contrôler le déplacement de ce levier.

4. Appareil de commande automatique selon une des revendications 1 à 3, caractérisé en ce qu'il est prévu une crémaillère (31) et un palier horizontal (33) sur le trajet de transmission entre au moins un des moteurs pas à pas (4, 5) et le levier de changement de vitesses (21).

5. Appareil de commande automatique selon la revendication 4, caractérisé en ce que le palier horizontal est une articulation à rotule (33) pour le déplacement vertical supplémentaire du levier de changement de vitesses (21).

6. Appareil de commande automatique selon la revendication 3, caractérisé en ce qu'une crémaillère (17, 18, 37) est susceptible de pivoter autour de l'axe (14, 15) d'au moins un des moteurs pas à pas (4, 5).

7. Appareil de commande automatique selon la revendication 6, caractérisé en ce que la crémaillère (17, 18) est susceptible de tourner librement autour de l'axe (14, 15) du moteur pas à pas (4, 5).

8. Appareil de commande automatique selon la revendication 6, caractérisé en ce que le mouvement de pivotement de la crémaillère (37) est commandé par l'un (40) des deux moteurs pas à pas.

9. Appareil de commande automatique selon la revendication 8, caractérisé en ce que la crémaillère (37) est montée mobile axialement sur un segment de cercle (39), qui est monté mobile en rotation par rapport à l'axe de l'un (38) des moteurs pas à pas.

Fig. 1

Fig. 2

Fig. 3

Fig. 4

EP 0 180 111 B1

*Fig. 5*

*Fig.6*

Fig.7

Fig. 8